(19) Europäisches Patentamt
European Patent Office
Office européen des brevets

(11) Publication number: **0 261 962 B1**

(12) **EUROPEAN PATENT SPECIFICATION**

(45) Date of publication of patent specification: **28.07.93** (51) Int. Cl.5: **C08F 297/08**

(21) Application number: **87308440.4**

(22) Date of filing: **24.09.87**

The file contains technical information submitted after the application was filed and not included in this specification

(54) **Process for producing propylene block copolymer.**

(30) Priority: **26.09.86 JP 227818/86**

(43) Date of publication of application:
**30.03.88 Bulletin 88/13**

(45) Publication of the grant of the patent:
**28.07.93 Bulletin 93/30**

(84) Designated Contracting States:
**DE FR GB IT NL**

(56) References cited:
**EP-A- 0 086 300**
**BE-A- 645 949**
**FR-A- 2 104 176**
**US-A- 4 334 041**

(73) Proprietor: **MITSUBISHI PETROCHEMICAL CO., LTD.**
**5-2, 2-chome, Marunouchi**
**Chiyoda-ku Tokyo 100(JP)**

(72) Inventor: **Negami, Yasuhiko c/o Mitsubishi Petrochemical**
**Company Ltd. Jushi kenkyusho**
**1, Toho-Cho Yokkaichi-Shi Mie-Ken(JP)**
Inventor: **Sakurai, Hideo c/o Mitsubishi Petrochemical**
**Company Ltd. Jushi kenkyusho**
**1, Toho-Cho Yokkaichi-Shi Mie-Ken(JP)**
Inventor: **Tomita, Masayuki c/o Mitsubishi Petrochemical**
**Company Ltd. Jushi kenkyusho**
**1, Toho-Cho Yokkaichi-Shi Mie-Ken(JP)**
Inventor: **Tanba, Takashi c/o Mitsubishi Petrochemical**
**Company Ltd. Jushi kenkyusho**
**1, Toho-Cho Yokkaichi-Shi Mie-Ken(JP)**

(74) Representative: **Kyle, Diana et al**
**Elkington and Fife Prospect House 8 Pembroke Road**
**Sevenoaks, Kent TN13 1XR (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 261 962 B1

## Description

This invention relates to a process for producing a propylene block copolymer having high rigidity and high impact strength as well as excellent moldability.

It has been known in the prior art to produce a crystalline homopolymer or copolymer of propylene (hereinafter, both may be sometimes referred to comprehensively as polypropylene) in the former stage in the presence of various types of stereospecific catalysts, and copolymerize propylene with another α-olefin in the presence of said propylene, thereby producing a rubbery copolymer of propylene and/or a crystalline homopolymer or copolymer of the other α-olefin, particularly a crystalline homopolymer of ethylene or a copolymer composed mainly of ethylene. Also, it has been known that according to such multistage polymerization process, a composition improved in impact resistance at a lower temperature while retaining excellent rigidity inherently possessed by polypropylene can be obtained.

Such composition is generally an intimate mixture of the homopolymers or copolymers produced in the respective stages, which is generally called a block copolymer. Such block copolymer is frequently used for containers, automobile parts, low temperature heat sealable films, high impact resistant films, etc.

As the catalyst to be used for production of such block copolymer, a titanium trichloride type catalyst has been used in the prior art, but this catalyst has low catalyst activity and therefore requires a step for removing the catalyst.

As a method for improving greatly the activity to such an extent as to make the catalyst removal step unnecessary, there have been proposed a large number of methods using carrier type catalysts as disclosed in, for example, Japanese Laid-Open Patent Publications Nos. 98045/1977, 88049/1978 and 83016/1983.

However, since a carrier type catalyst gives a copolymer portion in the second stage with a smaller molecular weight as compared with the titanium trichloride type catalyst, the block copolymer has a narrower molecular weight distribution to pose a problem that the moldability thereof during processing (spiral flow) becomes worsened.

The present inventors have already found that the moldability during processing can be improved to a great extent by addition of a special electron donor during initiation of the first stage polymerization as proposed in Japanese Laid-Open Patent Publication No. 218615/1986, and have successively conducted an intensive study to make further improvement.

On the other hand, several methods have recently been proposed wherein an electron donating compound is added on initiation of the second stage polymerization for the purpose of improving adhesiveness of the polymer particles (Japanese Laid-Open Patent Publication Nos. 69821/1986, 69822/1986 and 69823/1986).

However, according to these methods, molding processability of the block copolymer cannot be improved.

An object of the present invention is to solve the above problems and improve remarkably the moldability of a block copolymer by adding a specific additive on completion of the former stage polymerization in carrying out block copolymerization by the use of a carrier type catalyst.

Thus, the present invention provides a process for producing a propylene block copolymer, which comprises producing a crystalline homopolymer of propylene or copolymer of propylene with ethylene having an ethylene content of 7 weight % or less in the first stage in the presence of a Ziegler type catalyst formed of (A) a solid catalyst component comprising magnesium, titanium, a halogen and an electron donor as the essential components and (B) an organic aluminum compound, and polymerizing ethylene or a mixture of propylene/ethylene to produce a homopolymer of ethylene or a copolymer of ethylene with propylene having an ethylene content of at least 20 weight % in the second stage in the co-presence of said homopolymer or copolymer, characterised in that the second stage polymerization is carried out in the presence of 1 to 40 mol of an alkoxytitanium compound per mole of the titanium in the above component (A).

When producing a propylene block copolymer according to the process of the present invention, a propylene block copolymer having high rigidity, high impact strength and excellent moldability can be obtained using a carrier type high activity catalyst.

### Catalyst Components

The catalyst to be used in the present invention is formed of a component (A) and a component (B) and falls within the category of Ziegler type catalysts.

Here, the wording "formed of a component (A) and a component (B)" should be understood as not excluding the case where a third component which does not unduly impair the effect of the present invention or, more preferably, which effects rather advantageously the present invention is included. Representative of such third component is an electron donating compound [component (C)] as the so called external donor, and a catalyst formed of the components (A), (B) and (C) constitutes a preferred embodiment of the present invention.

Moreover, it may be said that the catalyst of the present invention further contains a specific compound, namely an alkoxy titanium compound, in the latter stage of block copolymerization.

Component (A)

The solid titanium catalyst component (A) to be used in the present invention contains magnesium, titanium, a halogen and an electron donor as the essential components. Here, the term "as the essential components" means not only the case where the solid titanium catalyst component (A) consists only of these specific three components, but also the case where an additional component may be contained, so long as the effect of the combination of the three components is at least maintained or not unduly impaired. An example of such additional component may be a silicon halide compound.

Magnesium is ordinarily introduced into the component (A) with the use of a magnesium halide, titanium with a titanium compound and a halogen with these compounds.

(1) Magnesium halide:

The magnesium halide is preferably a magnesium dihalide such as magnesium chloride, magnesium bromide and magnesium iodide and, most preferably, magnesium chloride, which is further desired to be substantially anhydrous.

Also, the magnesium halide may be a magnesium halide obtained by treating magnesium oxide, magnesium hydroxide, hydrotalcite, a carboxylic acid salt of magnesium, an alkoxymagnesium, an allyloxymagnesium, an alkoxymagnesium halide, an allyloxymagnesium halide or an organic magnesium compound with an electron donor, a halosilane, an alkoxysilane, a silanol, an aluminum compound, a titanium halide compound, a titanium tetraalkoxide.

(2) Titanium compound:

Representatives of titanium compound are trivalent and tetravalent halide compounds. Preferable halide compounds of titanium are tetravalent titanium halide compounds representated by the formula $Ti(OR^1)_nX_{4-n}$ (wherein $R^1$ is a $C_1$ - $C_{10}$ hydrocarbon residue, X is a halogen and n = 0, 1 or 2). Specific examples may include $TiCl_4$, $Ti(OBu)Cl_3$, $Ti(OBu)_2Cl_2$, and particularly preferred are titanium tetrahalides or monoalkoxytrihalides such as $TiCl_4$ and $Ti(OBu)Cl_3$. As the titanium compound, a titanium compound containing no halogen, for example, $Ti(OBu)_4$, may also be preferably used.

(3) Electron donating compound:

The electron donating compound which is an essential component of the solid catalyst component (A) is at least one of the specific compounds (a) to (c). Among them, the compound (c) is particularly preferred.

(a) One of the electron donating compounds is an ester (a) of a polyfunctional compound selected from the group consisting of polyvalent carboxylic acids, polyhydric alcohols and hydroxysubstituted carboxylic acids. Suitable esters of these polyfunctional esters may include those represented by the following formulae:

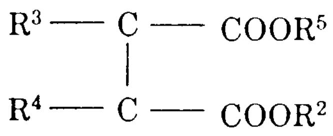 , 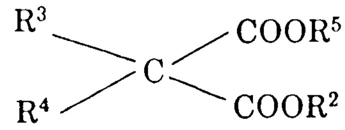 ,

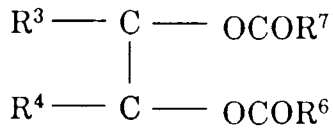 , or 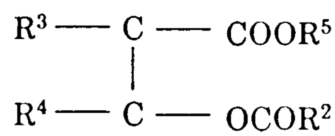 .

wherein $R^5$ is a substituted or unsubstituted hydrocarbon group; $R^2$, $R^3$ and $R^4$ are each hydrogen or a substituted or unsubstituted hydrocarbon group; $R^6$ and $R^7$ are each hydrogen or a substituted or unsubstituted hydrocarbon group, one of which is preferably a substituted or unsubstituted hydrocarbon group. $R^3$ and $R^4$ may be linked to each other. Here, the substituted hydrocarbon group may include those containing a heteroatom such as N, O and S, and those having groups such as C-O-C, COOR, COH, OH, $SO_3H$, -C-N-C-, $NH_2$.

Among them, particularly preferred is a diester of a dicarboxylic acid in which at least one of $R^5$ and $R^2$ is an alkyl group having 2 or more carbon atoms.

Specific examples of preferred polyvalent carboxylic acid esters are (a) aliphatic polycarboxylates such as diethyl succinate, dibutyl succinate, diethyl methylsuccinate, diisobutyl α-methylglutarate, dibutyl methylmalonate, diethyl malonate, diethyl ethylmalonate, diethyl isopropylmalonate, diethyl butylmalonate, diethyl phenylmalonate, diethyl diethylmalonate, diethyl allylmalonate, diethyl diisobutylmalonate, diethyl di-n-butylmalonate, dimethyl maleate, monooctyl maleate, dioctyl maleate, dibutyl maleate, dibutyl butylmaleate, diethyl butylmaleate, diisopropyl β-methylglutarate, diallyl ethylsuccinate, di-2-ethylhexyl fumarate, diethyl itaconate, dibutyl itaconate, dioctyl citraconate, and dimethyl citraconate; (b) aliphatic polycarboxylates such as diethyl 1,2-cyclohexane carboxylate, diisobutyl 1,2-cyclohexanecarboxylate, diethyl tetrahydrophthalate, and diethyl nadicate; (c) aromatic polycarboxylates such as monoethyl phthalate, dimethyl phthalate, methyl ethyl phthalate, monoisobutyl phthalate, mono-n-butyl phthalate, diethyl phthalate, ethylisobutyl phthalate, ethyl-n-butyl phthalate, di-n-propyl phthalate, diisopropyl phthalate, di-n-butyl phthalate, diisobutyl phthalate, di-n-heptyl phthalate, di-2-ethylhexyl phthalate, di-n-octyl phthalate, dineopenyl phthalate, didecyl phthalate, benzylbutyl phthalate, diphenyl phthalate, diethyl naphthalene dicarboxylate, dibutyl naphthalene dicarboxylate, triethyl trimellitate, and dibutyl trimellitate; (d) hetero carbon polycarboxylates such as 3,4-furan dicarboxylate.

On the other hand, specific examples of preferable polyhydric hydroxy compounds esters are 1,2-diacetoxybenzene, 1-methyl-2,3-diacetoxybenzene, 2,3-diacetoxynaphthalene, ethylene glycol dipivalate, butane diol pivalate.

Examples of esters of hydroxy-substituted carboxylic acids are benzoylethyl salicylate, acetylisobutyl salicylate, acetylmethyl salicylate.

Other examples of polyvalent carboxylic acid esters which can be carried in the titanium catalyst component are esters of long chain dicarboxylic acids such as diethyl adipate, diisobutyl adipate, diisopropyl sebacate, di-n-butyl sebacate, di-n-octyl sebacate, and di-2-ethylhexyl sebacate.

Among these polyfunctional esters, preferred are those having the formula as described above, further preferably esters of phthalic acid, maleic acid, substituted malonic acid with alcohols having 2 or more carbon atoms, particularly preferably diesters of phthalic acid with alcohols having 2 or more carbon atoms.

(b) Still another group of the electron donating component which is an essential component of the solid catalyst component (A) is a monocarboxylic acid ester represented by the formula $R^8COOR^9$ ($R^8$ and $R^9$ are each a hydrocarbyl group having 1 to 15 carbon atoms, and at least either one is a branched (including alicyclic) or a ring-containing chain group). Examples of $R^8$ and (or) $R^9$ are,

$(CH_3)_2CH-$, $C_2H_5CH(CH_3)-$, $(CH_3)_2CHCH_2-$, $(CH_3)_3C-$,

$C_2H_5CH(CH_3)CH_2-$, 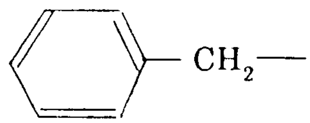 ,

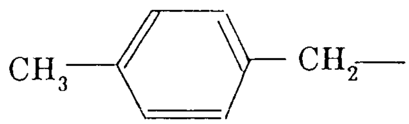 , 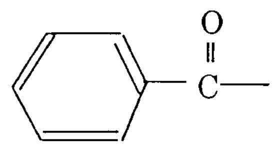 ,

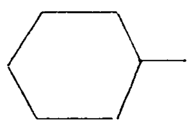 , 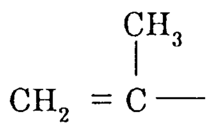 ,

If either one of $R^8$ and $R^9$ is a branched chain as mentioned above, the other may be a group as mentioned above or another group, for example, a straight chain or cyclic group.

Such monocarboxylic esters may be exemplified by various monoesters of $\alpha$-methylbutyric acid, $\beta$-methylbutyric acid, methacrylic acid, benzoylacetic acid, various monocarboxylic acid esters of isopropanol, isobutyl alcohol, tert-butyl alcohol.

(c) Organic silicon compound

As the electron donating compound, an organic silicon compound represented by the formula $R^{10}R^{11}Si(OR^{12})_2$ or $R^{10}Si(OR^{12})_3$ can be selected. In the formula, $R^{10}$ is a cyclic aliphatic hydrocarbon group, preferably a multicyclic hydrocarbon group having 3 to 20 carbon atoms, more preferably 5 to 12 carbon atoms. $R^{11}$ is a cyclic or chain aliphatic hydrocarbon group having 1 to 20, preferably 1 to 12 carbon atoms. $R^{12}$ is a cyclic or chain aliphatic hydrocarbon group, preferably a chain aliphatic hydrocarbon group having not more than 4 carbon atoms. In the following, specific examples are shown by structural formulae.

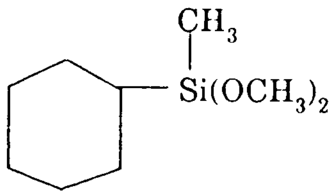 ,

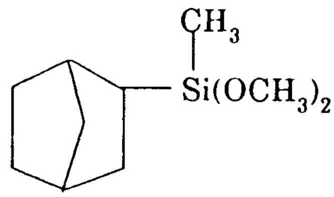 ,

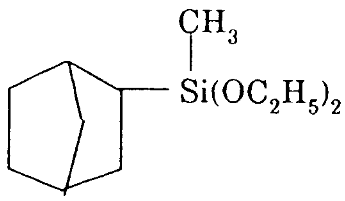 ,

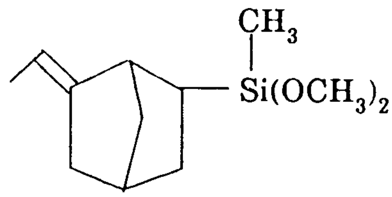 ,

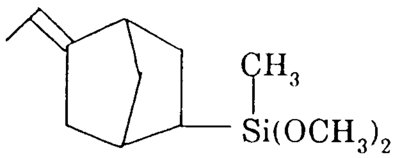 ,

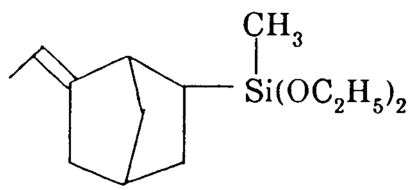 ,

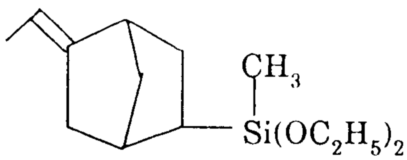 ,

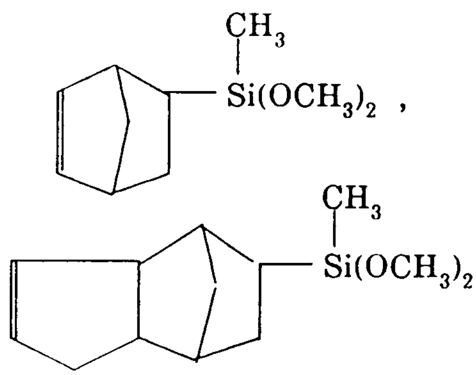 ,

,

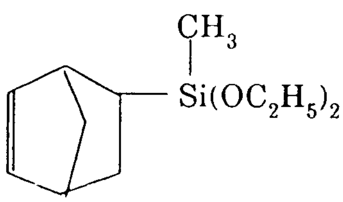 ,

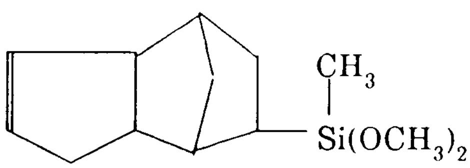 ,

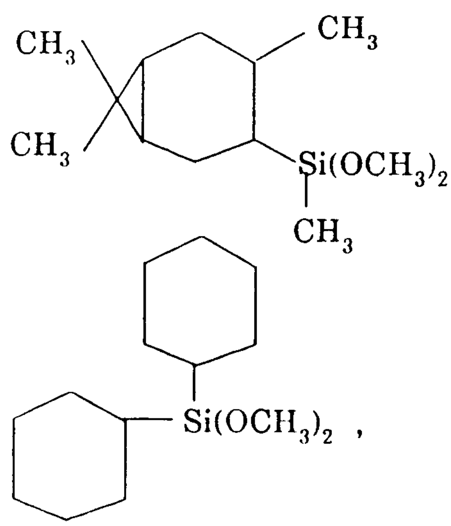 ,

,

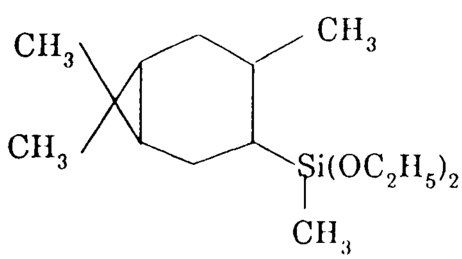 ,

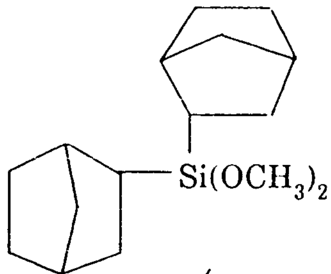 ,

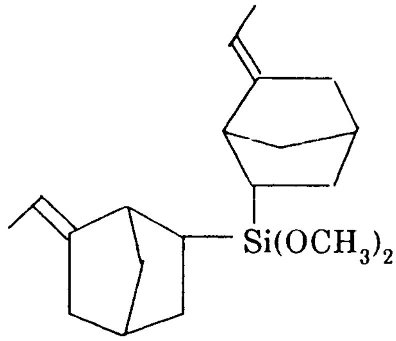 ,

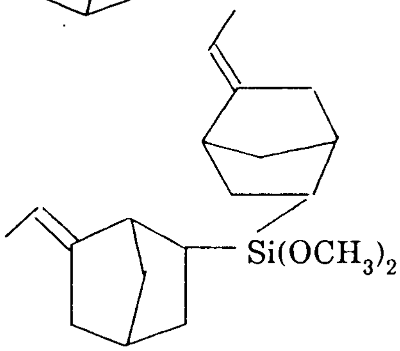 ,

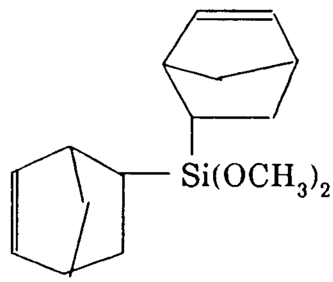 ,

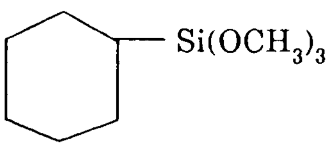 ,

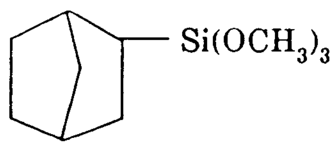 ,

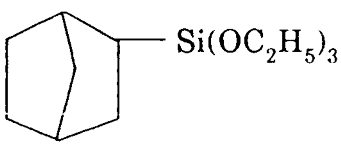 ,

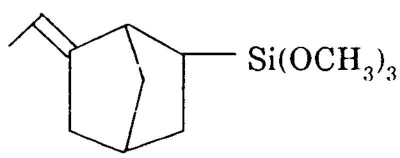 ,

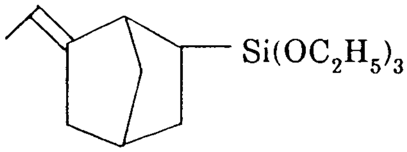 ,

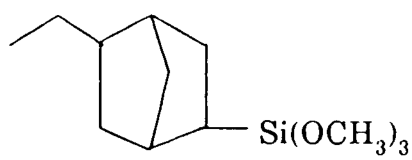 ,

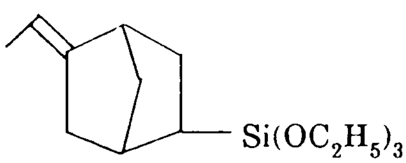 ,

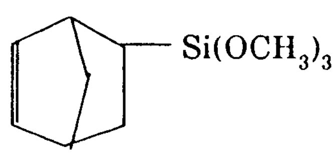 ,

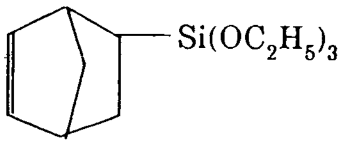 ,
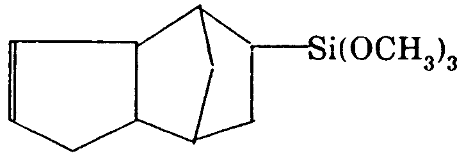 ,

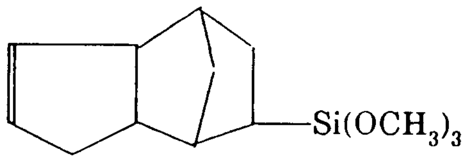 ,
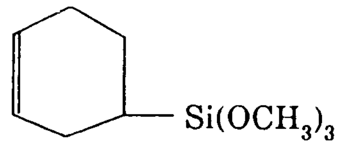 ,

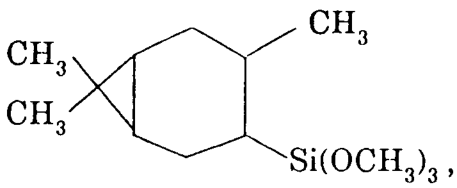 ,
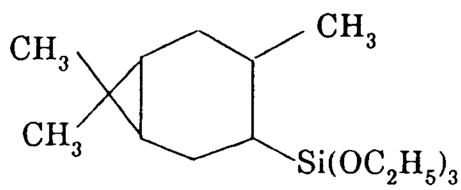 .

Further, an organic silicon compound represented by the following formula can also be selected.

$R^{13}R^{14}_{3-n}Si(OR^{15})_n$

wherein $R^{13}$ is a branched chain hydrocarbon residue, $R^{14}$ and $R^{15}$ each represent a branched or straight chain hydrocarbon residue, and n is a number of $2 \leqq n \leqq 3$).

$R^{13}$ may be preferably branched from the carbon atom adjacent to the silicon atom. The branching group in that case may be preferably an alkyl group, a cycloalkyl group or an aryl group (e.g. phenyl or methyl-substituted phenyl). The more preferable $R^{1}{}_{3}$ may be such one that the carbon atom adjacent to the silicon atom, namely the carbon atom at the $\alpha$-position, is secondary or tertiary carbon atom.

Above all, a compound having a structure in which three alkyl groups are extending from the carbon atom bonded to the silicon atom is preferred. $R^{13}$ has generally 3 to 20, preferably 4 to 10 carbon atoms. $R^{14}$ is ordinarily a branched or straight chain aliphatic hydrocarbon group having 1 to 20, preferably 1 to 10 carbon atoms. $R^{15}$ is ordinarily an aliphatic hydrocarbon group, preferably a chain aliphatic hydrocarbon group having 1 to 4 carbon atoms.

Specific examples are shown below by structural formulae.

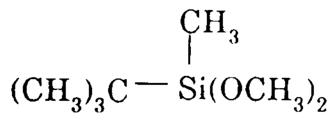 ,

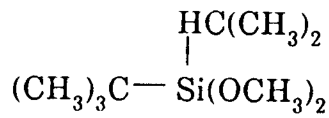 ,

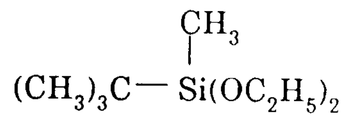 ,

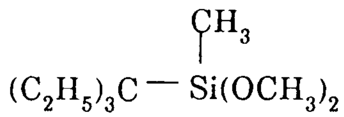 ,

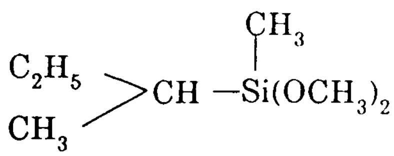 ,

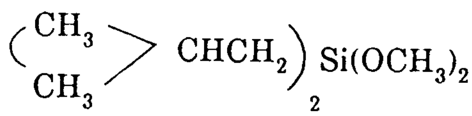

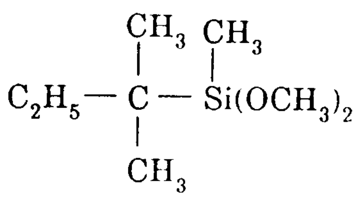 ,

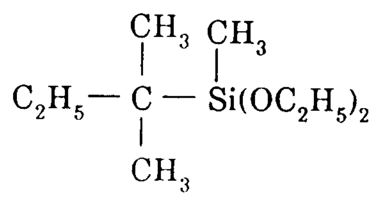 ,

$(CH_3)_3C$— $Si(OCH_3)_3$ ,     $(CH_3)_3C$— $Si(OC_2H_5)_3$ ,

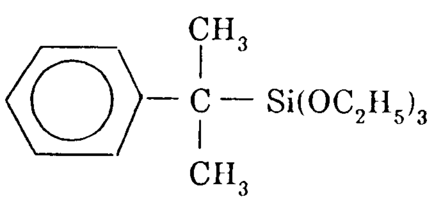 ,

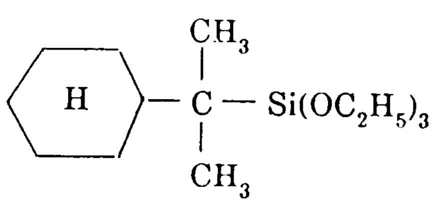 ,

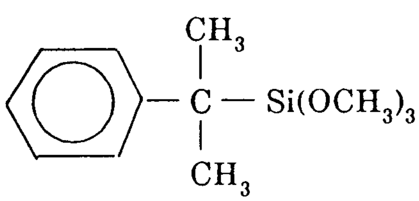 ,

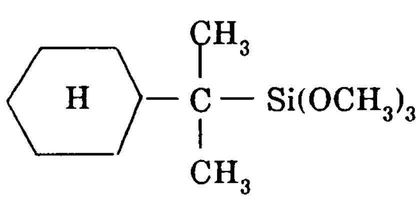 ,

$(C_2H_5)_3C$— $Si(OC_2H_5)_3$ ,

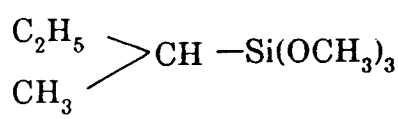 ,

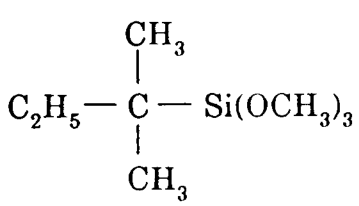 .

In incorporating these electron donating components into the solid catalyst component (A), these are not necessarily used as they are as the starting materials. That is, it is possible to use compounds which are convertible to the above electron donors in the course of preparation of the solid catalyst component and convert the compounds in said preparation step.

(4) Preparation of solid catalyst component (A):

In preparing the solid catalyst component (A), the magnesium halide should desirably be one which has been subjected to preliminary treatment. This preliminary treatment can be done according to various known methods, including specifically the following methods.

(a) A magnesium dihalide, or a magnesium dihalide together with titanium, silicon or an aluminum halide or a halogenated hydrocarbon is pulverized. Pulverization can be effected by the use of a ball mill or a rocking mill.

(b) A magnesium dihalide is dissolved by the use of a hydrocarbon or a halogenated hydrocarbon as a solvent and an alcohol, a phosphate ester or a titanium alkoxide as a dissolving accelerator. Next, the dissolved magnesium dihalide is precipitated by the addition of a poor solvent, an electron donor such as an inorganic halide, ester, or a polymeric silicon compound such as methylhydrogen polysiloxane.

(c) A mono- or di-alcoholate of magnesium or a magnesium carboxylate and a halogenating agent are subjected to contact reaction.

(d) Magnesium oxide and chlorine or $AlCl_3$ are subjected to contact reaction.

(e) $MgX_2 \cdot nH_2O$ (X is a halogen) and a halogenating agent or $TiCl_4$ are subjected to contact reaction.

(f) $MgX_2 \cdot nROH$ (X is a halogen) and a halogenating agent or $TiCl_4$ are subjected to contact reaction.

(g) Grignard reagent, $MgR_2$ compound (R is an alkyl group), or a complex of $MgR_2$ compound and trialkylaluminum compound is subjected to contact reaction with a halogenating agent such as $AlX_3$, $AlR_mX_{3-m}$ (X is halogen, R is an alkyl group), $SiCl_4$ or $SiCl_3$.

(h) Grignard reagent and silanol, or a polysiloxane, $H_2O$ or silanol are subjected to contact reaction, followed by contact reaction with halogenating agent or $TiCl_4$.

As to details about such preliminary treatment of the magnesium halide, reference can be made to Japanese Patent Publications Nos. 611/1971, 34092/1971, 3514/1976, 67311/1981, 40632/1978, 50888/1981, 48565/1982, 36786/1977, 499/1983; Japanese Laid-Open Patent Publications Nos. 45686/1978, 126590/1975, 31092/1979, 135102/1980, 135103/1980 811/1981, 11908/1981, 180612/1982, 5309/1983, 5310/1983 and 5311/1983.

Contact between the preliminarily treated magnesium with the titanium halide and the electron donating compound may be effected either by contact of the complex formed between the titanium halide and the electron donating compound with the magnesium chloride, or by contact with the magnesium chloride and the titanium halide, followed by contact with the electron donating compound, or by contact of the magnesium chloride with the electron donating compound, followed by contact with the titanium halide.

The above mentioned contact may be conducted by pulverization by means of a ball mill or rocking mill, or by adding magnesium chloride or magnesium chloride treated with the electron donating compound into the liquid phase of the titanium halide.

After contact of the three components or the four components or in the intermediate stage during the contacts between the respective components, washing may be done with an inert solvent.

The titanium halide content in the thus formed solid catalyst component (A) is 1 to 20 wt.%, the content of the magnesium halide is 50 to 98 wt.%, with the molar ratio of the electron donating compound to the titanium halide being 0.05 to 2.0.

Component (B)

The organic aluminum compound to be used as the component (B) in the present invention should preferably be one represented by the formula $AlR_nX_{3-n}$ (where R represents a hydrocarbon residue having 1 to 12 carbon atoms, X represents a halogen or an alkoxy group, and n is $0<n\leqq3$).

Specific examples of such organic aluminum compound are triethylaluminum, tri-n-propylaluminum, tri-n-butylaluminum, triisobutylaluminum, tri-n-hexylaluminum, triisohexylaluminum, trioctylaluminum, diethylaluminum hydride, diisobutylaluminum hydride, diethylaluminum monochloride, ethylaluminum sesquichloride, and diethylaluminum monoethoxide. Of course, these organic aluminum compounds can also be used in combination of two or more kinds.

The proportion of the organic aluminum compound (B) to the solid catalyst component (A) used in the polymerization of $\alpha$-olefin can be varied over wide range, and it is possible to use the organic aluminum

compound generally at a ratio of 1 to 1000, preferably 10 to 500 (molar ratio) per titanium atom contained in the solid catalyst component.

Component (C)

In the block copolymer of the present invention, various electron donors can be used according to necessary. As the electron donor, ethers, amines, organic silicon compounds may be preferably used. Specific examples are shown below.

(a) Ether compounds

One example of the ether to be used in the present invention is an ether represented by the formula:

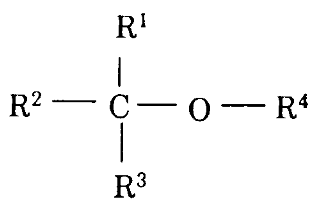

wherein, $R^1$ - $R^3$ are each a saturated or unsaturated hydrocarbon residue, generally an alkyl or alkenyl group (including substituted derivatives substituted with halogen or phenyl group) having 1 to 10 carbon atoms, preferably 1 to 4 carbon atoms, or a phenyl group (including substituted derivatives substituted with halogen, alkyl (particularly lower alkyl) or phenyl) having 6 to 12 carbon atoms, preferably 6 to 10 carbon atoms. Further, one or two of $R^1$ - $R^3$ are phenyl groups (including substituted derivatives substituted with halogen or alkyl (particularly lower alkyl)). $R^4$ is a hydrocarbon group. Specific examples of such ether compounds are α-cumyl methyl ether, α-cumyl ethyl ether, 1,1-diphenylethyl methyl ether, 1,1-diphenylethyl ethyl ether, α-cumyl tert-butyl ether, di-α-cumyl ether, 1,1-ditolylethyl methyl ether, 1,1-ditolylethyl ethyl ether, bis(1,1-ditolylethyl)ether, and 1-tolyl-1-methylethyl methyl ether.

Other than those mentioned above, ether compounds such as 1,4-cineole, 1,8-cineole, m-cineole, can be also used.

(b) Amine compound

The amine compound to be used in the present invention is a steric hindrance amine such as 2,2,6,6-tetramethylpiperidine, 2,2,6,6-tetraethylpiperidine.

(c) Organic silicon compound

Specific examples of the organic silicon compound to be used in the present invention may be found in the above mentioned exemplary organic silicon compounds to be used as the electron donating compound contained in the solid titanium catalyst component and, among them, dialkoxy or trialkoxy silanes may be preferably used. Specific examples are shown below by structural formulae.

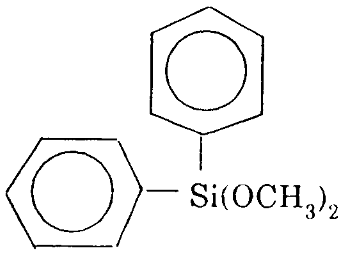 ,

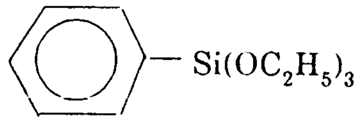 ,

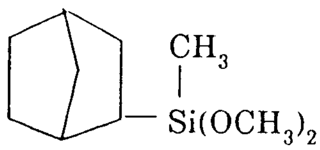 ,

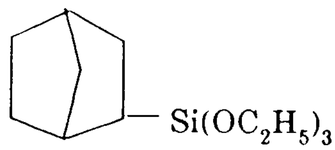 ,

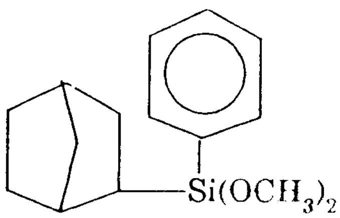 ,

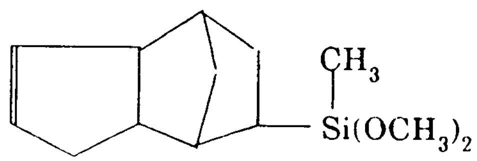 ,

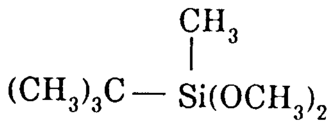 , 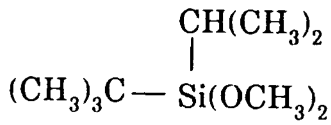 ,

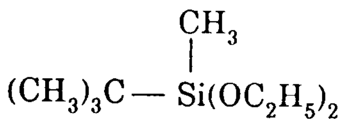 , 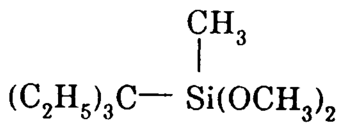 ,

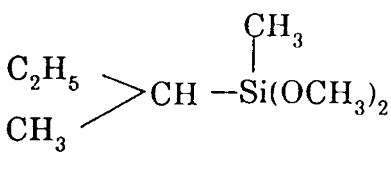 , 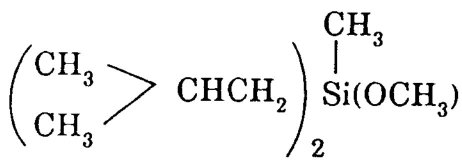 ,

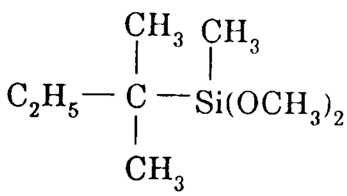 , 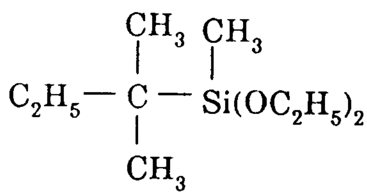 ,

$(CH_3)_3C-Si(OCH_3)_3$ , $(CH_3)_3C-Si(OC_2H_5)_3$ ,

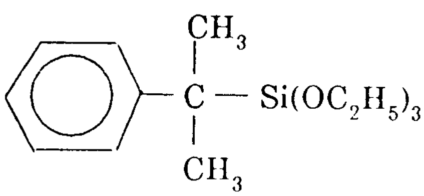 , 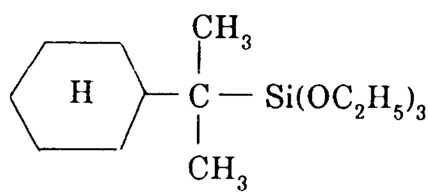 ,

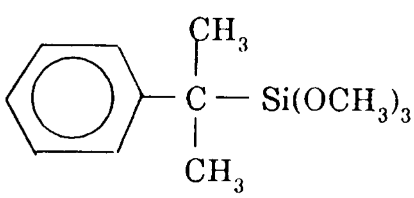 , 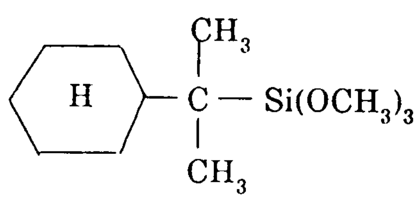 ,

$(C_2H_5)_3C-Si(OC_2H_5)_3$ ,

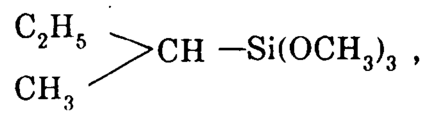

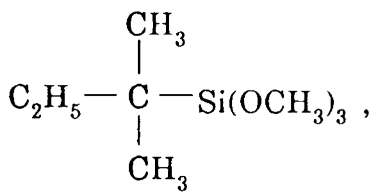

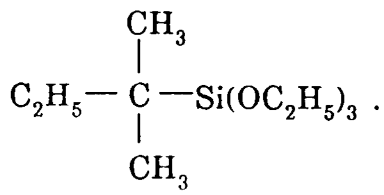

The molar ratio of the electron donor (C) to the organic aluminum compound (B) may be generally 0.01 to 1.0, preferably 0.02 to 0.5.

Block Copolymerization

The polymerization steps of the present invention to be carried out in the presence of the above catalyst comprise the two stages of the first stage polymerization to produce a crystalline homopolymer or copolymer of propylene and the second stage polymerization to polymerize propylene and ethylene at a ratio of 0/100 to 80/20 in the presence of an alkoxy titanium compound.

Here, to carry out the second stage polymerization "in the presence of an alkoxy titanium compound" means that the substantial portion of the second stage polymerization is conducted in the presence of an alkoxy titanium compound, thus meaning that the addition operation of the alkoxy titanium compound may be done at the latter half of the first stage polymerization or later, particularly on substantial completion thereof, before the former half of the second polymerization, particularly before substantial initiation thereof.

First stage polymerization

The first stage polymerization is a step in which propylene alone or a mixture of propylene/ethylene is fed into the polymerization system in which the above catalysts (A), (B) and, if desired, (C) have been added to form a propylene homopolymer or a propylene/ethylene copolymer containing 7 wt.% or less, preferably 1.0 wt.% or less of ethylene in one step or multiple steps so that the amount of the polymer produced will be 50 to 95 wt.%, preferably 60 to 90 wt.% of the total amount of polymerized product.

If the ethylene content in the propylene/ethylene copolymer is increased more than the above-mentioned level in the first stage polymerization, the bulk density of the final copolymer will be lowered and the amount of low crystalline polymer by-produced will be increased in great extent. Also, if the polymerization ratio is less than the above range, the same phenomenon will occur as in the case when the ethylene content is larger. On the other hand, if the polymerization ratio exceeds the above range, the amount of low crystalline polymer by-product tends to be reduced, by the impact strength which is intended by the block copolymer will be undesirably lowered.

The former stage polymerization may be performed at a temperature of 30 to 90 °C, preferably 50 to 80 °C, under a pressure of 1 to 30 $kg/cm^2$.

It is preferable to use a molecular weight controller in the first stage polymerization to make the fluidity of the final polymer appropriate, and hydrogen may be preferably used as the molecular weight controller.

Addition of alkoxy titanium compound

A preferable alkoxy titanium compound to be added in the latter stage polymerization may be a tetraalkoxy titanium compound, namely a tetraalkyltitanate. Specific examples are those having an alkyl group with 1 to 10 carbon atoms, particularly 2 to 6 carbon atoms, such as tetraethyltitanate, tetra-n-propyltitanate, tetra-i-propyltitanate, tetra-n-butyltitanate, tetra-t-butyltitanate, tetra-n-hexyltitanate, and tetraoctyltitanate. Among them, alkyltitanates with 3 or more carbon atoms, particularly tetra-n-butyltitanate, are preferred.

The amount of the alkoxy titanium compound added may be generally 1 to 40 moles per mole of the titanium in the catalyst (A), preferably in the range of 5 to 30 moles.

The timing at which the alkoxy titanium compound is added may be in the course of the first stage polymerization or in the course of the second stage polymerization. A preferable addition timing is on completion of the first stage polymerization or on initiation of the second stage polymerization. An organic aluminium compound may be concomitantly added on the addition of the alkoxy titanium compound.

Second stage polymerization

The second stage polymerization is a step in which a mixture of propylene/ethylene is further introduced subsequent to the first stage polymerization to obtain a propylene/ethylene copolymer with an ethylene content of 20 to 100 wt.%, preferably 30 to 100 wt.%, most preferably 75 to 95 wt.% in one step or multiple steps. In this step, it is preferable to form the copolymer in an amount corresponding to 5 to 50 wt.%, preferably 10 to 40 wt.% of the total amount of polymerized product.

If the polymerization ratio or the composition of the propylene/ethylene mixture are less than the above ranges, impact resistance (particularly low temperature impact resistance) is poor and the improvement effect of spiral flow is also small. On the other hand, if they exceed the above ranges, the amount of low crystalline polymer by-produced will be increased to great extent, and also the polymer solution viscosity is remarkably increased to cause problems in running.

In the second stage polymerization, a small amount of other comonomers may also be permitted to coexist. Such comonomers may be, for example, α-olefins such as 1-butene, 1-pentene, 1-hexene.

The latter stage polymerization may be carried out at a temperature of 30 to 90 °C, preferably 50 to 80 °C, under a pressure of 1 to 30 kg//cm$^2$.

When turning from the first stage polymerization to the second stage polymerization, it is preferable to purge the propylene gas or the propylene/ethylene gas mixture and hydrogen atom derived from the first stage polymerization before initiation of the latter stage polymerization.

In the second stage polymerization, a molecular weight controller may be used or not depending on the purpose. Thus, it is preferable to practice the step substantially in the absence of a molecular weight controller when it is desired to elevate the impact resistance of the final polymer.

Polymerization system

The process for producing the copolymer according to the present invention can be carried out according to any of the batch system, the continuous system and the semi-batch system. In carrying out the process, it is possible to employ a method in which polymerization is carried out in an inert hydrocarbon solvent such as heptane, etc., a method in which the monomer used itself is utilized as the medium, a method in which polymerization is carried out in gaseous monomer without the use of a medium, or further a method in which these are combined. The first stage polymerization and the second stage polymerization may be also performed in separate polymerization tanks.

Also, before providing the solid catalyst for polymerization, preliminary polymerization may be conducted under milder conditions (see Japanese Laid-open Patent Publications Nos. 71712/1980 and 57814/1981).

Experimental Examples

The following examples are set forth to describe in more detail the present invention. These are shown to illustrate some of the embodiments of the present invention.

Example 1

(1) Preparation of solid catalyst component:

A three-necked flask made of a glass of 500 ml volume (equipped with a thermometer and a stirring rod) replaced with nitrogen was charged with 75 ml of purified heptane, 75 ml of titanium tetrabutoxide and 10 g of anhydrous magnesium chloride. Then, the temperature within the flask was elevated to 90 °C and magnesium chloride was completely dissolved over 2 hours. Next, the flask was cooled to 40 °C, and magnesium chloride-titanium tetrabutoxide complex was precipitated by addition of 15 ml of methylhydrogen polysiloxane. This was washed with purified heptane to give a grayish white solid.

Into a three-necked glass flask of 300 ml volume (equipped with a thermometer and a stirring rod) was introduced 65 ml of a heptane slurry containing 20 g of the precipitated solid obtained above. Subsequently,

25 ml of a heptane solution containing 8.7 ml of silicon tetrachloride was added at room temperature over 30 minutes, and further the reaction was carried out at 30 °C for 30 minutes. Further, the reaction was conducted at 90 °C for 1 hour and, after completion of the reaction, the product was washed with purified heptane. Next, 50 ml of a heptane solution containing 1.6 ml of phthaloyl chloride was added and the reaction was carried out at 50 °C for 2 hours. Then, the product was washed with purified heptane, and further the reaction was carried out with addition of 25 ml of titanium tetrachloride at 90 °C for 2 hours. The reaction product was washed with purified heptane to give a solid catalyst component. The titanium content in the solid catalyst component was found to be 3.22 wt.%.

(2) Polymerization

After a stirring system autoclave of 200 liter inner volume was thoroughly replaced with propylene, 60 liters of dehydrated and deoxygenated n-heptane were introduced thereinto, and 15.0 g of triethylaluminum (B), 3.0 g of the above solid composition (A) and 6.4 g of diphenyldimethoxysilane were introduced at 70 °C under propylene atmosphere.

The first stage polymerization was initiated after temperature elevation of the autoclave to 75 °C by introducing propylene at a speed of 9 kg/hour while maintaining the hydrogen concentration at 2.0%.

After 215 minutes, polymerization of propylene was stopped, and further polymerization was continued at 75 °C for 90 minutes. Propylene in the gas phase portion was purged to 0.2 kg/cm$^2$G.

Next, 6.8 g of tetra-n-butyltitanate was added, the autoclave was cooled to 60 °C, and the second stage polymerization was practiced by feeding propylene at a feed rate of 1.57 g/hour and ethylene at 2.35 kg/hour for 87 minutes.

The slurry thus obtained was filtered and dried to obtain 36.4 kg of a powdery block copolymer.

Details of the results are as shown in Table 1.

The weight ratio of the polymer formed in the first stage polymerization to the polymer formed in the second stage polymerization, and the weight ratio of propylene to ethylene in the second stage polymerization are calculated values on the feed basis.

(3) Measurement of physical properties

(a) MFR:

MFR was measured according to ASTM-1238.

(b) Ethylene content:

Ethylene content in the product was calculated from IR absorption spectrum.

(c) Measurement of practical physical properties:

Each powdery polymer obtained in the respective Examples and Comparative Examples was blended with the additives shown below, pelletized by an extruder under the same conditions and a sheet with a thickness of 4 mm was prepared by an injection molding machine for evaluation of physical properties.

| Additives | |
|---|---|
| 2,6-di-tert-butylphenol | 0.10 wt.% |
| RA1010 (produced by Ciba-Geigy) | 0.05 wt.% |
| Calcium stearate | 0.10 wt.% |
| PTBBA-Al (produced by Shell Chemical) | 0.10 wt.% |

Measurement of physical properties

Various physical properties were measured according to the following methods.

(a) Flexural modulus: ASTM-D790

(b) Izod impact strength (0 °C): ASTM-D256 (notched)

(c) Spiral flow measuring method:

By use of various SJ type (in-line screw type) injection molding machines, measurement was conducted in a mold with a cross-section of 2 mm x 8 mm under the following conditions:

Molding temperature: 240 ° C
Injection pressure: 800 kg/$cm^2$
Injection time: 6 seconds
Mold temperature: 40 ° C
Injection rate: 50 g/sec.

Comparative Example 1

In carrying out block copolymerization, Example 1 was repeated under the same conditions except for adding no tetra-n-butyltitanate on completion of the first stage polymerization. As the result, 33.4 kg of a product powder was obtained.

Details of the results are shown in Table 1.

Examples 2 - 4

In carrying out block copolymerization, Example 1 was repeated except for changing the weight ratio of the former stage polymerization to the second stage polymerization, and the weight ratio of propylene to ethylene in the second stage polymerization.

The results are shown in Table 1.

Comparative Example 2

In carrying out block copolymerization, Example 1 was repeated under the same conditions except for using 22.8 g of tetraethyl titanate as the additive on completion of the first stage polymerization.

The results are shown in Table 1.

Example 5

In carrying out block copolymerization, Example 1 was repeated except for changing the additive on initiation of the first stage polymerization from diphenyldimethoxysilane to 4.2 g of tert-butylmethyldimethoxysilane.

The results are shown in Table 1.

Example 6

(1) Preparation of solid catalyst component:

A three-necked glass flask of 500 ml volume (equipped with a thermometer and a stirring rod) replaced with nitrogen was charged with 75 ml of purified heptane, 75 ml of titanium tetrabutoxide and 10 g of anhydrous magnesium chloride. Then, the temperature within the flask was elevated to 90 ° C and magnesium chloride was completely dissolved over 2 hours. Next, the flask was cooled to 40 ° C, and magnesium chloride-titanium tetrabutoxide complex was precipitated by the addition of 15 ml of methylhydrogen polysiloxane. This was washed with purified heptane to give a grayish white solid.

Into a three-necked glass flask of 300 ml volume (equipped with a thermometer and a stirring rod) was introduced 65 ml of a heptane slurry containing 20 g of the precipitated solid obtained above. Subsequently, 25 ml of a heptane solution containing 8.7 ml of silicon tetrachloride was added at room temperature over 30 minutes, and further the reaction was carried out at 30 ° C for 30 minutes. Further, the reaction was conducted at 90 ° C for 1 hour and, after completion of the reaction, the product was washed with purified heptane. Next, 50 ml of a heptane solution containing 1.6 ml of phthaloyl chloride was added and the reaction was carried out at 50 ° C for 2 hours. Then, the product was washed with purified heptane, and further the reaction was carried out with addition of 25 ml of titanium tetrachloride at 90 ° C for 2 hours. The reaction product was washed with purified heptane and further the reaction was carried out with addition of 1.0 g of tert-butylmethyldimethoxysilane to give a solid catalyst component. The titanium content in the solid catalyst component was found to be 2.56 wt.%.

(2) Polymerization

After a stirring system autoclave of 200 liter inner volume was thoroughly replaced with propylene, 60 liters of dehydrated and deoxygenated n-heptane were introduced thereinto, and 15.0 g of triethylaluminum (B) and 3.0 g of the above solid composition (A) were introduced at 70 ° C under propylene atmosphere.

The first stage polymerization was initiated after temperature elevation of the autoclave to 75 ° C by introducing propylene at a rate of 9 kg/hour while maintaining the hydrogen concentration at 2.5%.

After 215 minutes, introduction of propylene was stopped, and further polymerization was continued at 75 ° C for 90 minutes. Propylene in the gas phase portion was purged to 0.2 $kg/cm^2G$.

Next, 6.8 g of tetra-n-butyltitanate was added and the autoclave was cooled to 60 ° C, and the second stage polymerization was practiced by feeding propylene at a feed rate of 1.57 g/hour and ethylene at 2.35 kg/hour for 87 minutes.

The results are shown in Table 1.

## Example 7

(1) Preparation of solid catalyst component

A solid catalyst component was prepared in the same manner as in Example 7, except for using 1.5 g of norbornylmethyldimethoxysilane in place of tert-butylmethyldimethoxysilane.

(2) Polymerization

Example 6 was repeated. The results are shown in Table 1.

## Example 8

(1) Preparation of solid catalyst component

A solid catalyst component was prepared in the same manner as in Example 6, except for using 1.5 g of tert-butyltriethoxysilane in place of tert-butylmethyldimethoxysilane.

(2) Polymerization

Example 6 was repeated. The results are shown in Table 1.

Table 1

| Exam. No. | Additive on initiation of first stage | Additive on completion of first stage | | First stage polymer/second stage polymer weight ratio | Propylene /ethylene weight ratio of second stage polymer | Ethylene content (wt.%) | MFR (g/10 min) | Powder bulk density (g/cc) | Spiral flow (mm) | Flexural modulus (kp·cm²) (1 kp/cm² ≈ 0,1 N/mm²) | Izod impact strength (kp·cm/cm²) (1 kpcm/cm² ≈ 1 kJ/m²) |
|---|---|---|---|---|---|---|---|---|---|---|---|
| | | Compound | Molar ratio relative to solid catalyst Ti | | | | | | | | |
| Exam. 1 | $Ph_2Si(OMe)_2$ | $Ti(On\text{-}Bu)_4$ | 10 | 85/15 | 40/60 | 3.9 | 8.3 | 0.515 | 830 | 11,400 | 4.2 |
| Comp. Exam. 1 | " | - | - | " | " | 3.9 | 9.3 | 0.472 | 710 | 11,200 | 3.8 |
| Exam. 2 | " | $Ti(On\text{-}Bu)_4$ | 10 | 75/25 | 70/30 | 3.8 | 8.7 | 0.503 | 900 | 10,500 | 6.7 |
| Exam. 3 | " | " | " | 90/10 | 20/80 | 5.2 | 9.0 | 0.529 | 810 | 13,300 | 3.5 |
| Exam 4 | " | " | " | 90/10 | 60/40 | 2.1 | 9.1 | 0.520 | 790 | 13,000 | 3.3 |
| Comp. Exam. 2 | " | $Ti(OEt)_4$ | 50 | 85/15 | 40/60 | 3.9 | 8.3 | 0.489 | 730 | 11,100 | 3.9 |
| Exam. 5 | $Me_3CSi(Me)(OMe)_2$ | $Ti(On\text{-}Bu)_4$ | 10 | " | " | 4.0 | 8.1 | 0.525 | 840 | 12,100 | 4.1 |
| Exam. 6 | - | " | " | " | " | 4.0 | 8.2 | 0.521 | 810 | 12,000 | 4.1 |
| Exam. 7 | - | " | " | " | " | 4.0 | 8.0 | 0.522 | 800 | 11.700 | 4.3 |
| Exam. 8 | - | " | " | " | " | 4.0 | 8.5 | 0.520 | 830 | 11,800 | 4.0 |

## Claims

1. A process for producing a propylene block copolymer, which comprises producing a crystalline homopolymer of propylene or copolymer of propylene with ethylene having an ethylene content of 7 weight % or less in the first stage in the presence of a Ziegler type catalyst formed of (A) a solid catalyst component comprising magnesium, titanium, a halogen and an electron donor as the essential components and (B) an organic aluminum compound, and polymerizing ethylene or a mixture of propylene/ethylene to produce a homopolymer of ethylene or a copolymer of ethylene with propylene having an ethylene content of at least 20 weight % in the second stage in the co-presence of said homopolymer or copolymer, characterised in that the second stage polymerization is carried out in the presence of 1 to 40 mol of an alkoxytitanium compound per mole of the titanium in the above component (A).

2. The process according to claim 1, wherein magnesium contained in the solid catalyst component (A) is supplied by a magnesium halide.

3. The process according to claim 2, wherein the magnesium halide is a magnesium dihalide selected from the group consisting of magnesium chloride, magnesium bromide and magnesium iodide.

4. The process according to claim 3, wherein the magnesium halide is a magnesium chloride which is substantially anhydrous.

5. The process according to any of the preceding claims, wherein titanium contained in the solid catalyst component (A) is supplied by a titanium halide compound represented by the formula $Ti(OR^1)_nX_{4-n}$, wherein $R^1$ is a $C_1$-$C_{10}$ hydrocarbon residue, X is a halogen, and n = 0, 1 or 2.

6. The process according to claim 5, wherein the titanium halide compound is $TiCl_4$ or $Ti(OBu)Cl_3$.

7. The process according to any of the preceding claims, wherein the electron donor contained in the solid catalyst component (A) is a polyfunctional ester selected from the group consisting of a polyvalent carboxylic acid, a polyhydric alcohol and a hydroxy-substituted carboxylic acid.

8. The process according to claim 7, wherein the polyfunctional ester is one represented by the following formulae:

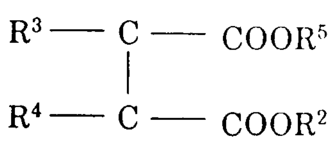 ,

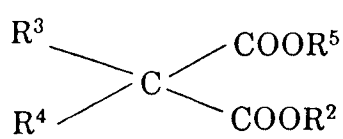 ,

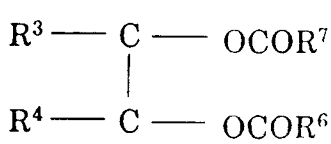 ,

or

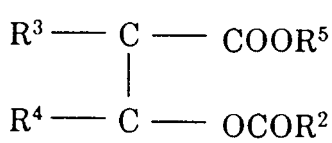 .

wherein $R^5$ is a substituted or unsubstituted hydrocarbon group; $R^2$, $R^3$ and $R^4$ are each hydrogen or a substituted or unsubstituted hydrocarbon group; $R^6$ and $R^7$ are each hydrogen or a substituted or unsubstituted hydrocarbon group, where $R^3$ and $R^4$ may be linked to each other.

9. The process according to claim 8, wherein the polyfunctional ester is a diester of phthalic acid with alcohols having 2 or more carbon atoms.

10. The process according to any of the preceding claims, wherein the electron donor contained in the solid component (A) is a monocarboxylic acid ester represented by the formula $R^8COOR^9$, wherein $R^8$

and $R^9$ are each a hydrocarbyl group having 1 to 15 carbon atoms, and at least either one is a branched (including alicyclic) or a ring-containing chain group.

**11.** The process according to any of the preceding claims, wherein the electron donor contained in the solid component (A) is an organic silicon compound represented by the formula (a) $R^{10}R^{11}Si(OR^{12})_2$ or $R^{10}Si(OR^{12})_3$, wherein $R^{10}$ is a multicyclic hydrocarbon group having 3 to 20 carbon atoms, $R^{11}$ is a cyclic or chain aliphatic hydrocarbon group having 1 to 20 carbon atoms, and $R^{12}$ is a chain aliphatic hydrocarbon group having not more than 4 carbon atoms; or (b) $R^{13}R^{14}{}_{3-n}Si(OR^{15})_n$, wherein $R^{13}$ is a branched chain hydrocarbon residue having 3 to 20 carbon atoms, $R^{14}$ is a branched or straight chain aliphatic hydrocarbon residue having 1 to 20 carbon atoms, and $R^{15}$ is a chain aliphatic hydrocarbon residue having 1 to 4 carbon atoms, and n is a number of $2 \leqq n \leqq 3$.

**12.** The process according to any of the preceding claims, wherein the organic aluminum compound as the catalyst component (B) is one represented by the formula $AlR_nX_{3-n}$, wherein R represents a hydrocarbon residue having 1 to 12 carbon atoms, X is a halogen or an alkoxy group, and n is $0 < n \leqq 3$.

**13.** The process according to any of the preceding claims, wherein the Ziegler type catalyst further comprises an electron donor selected from the group consisting of (a) an ether represented by the formula:

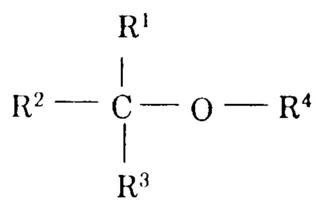

wherein $R^1$ - $R^3$ are each an alkyl or alkenyl group (including substituted derivatives substituted with halogen or phenyl group) having 1 to 10 carbon atoms, or a phenyl group (including substituted derivatives substituted with halogen, alkyl or phenyl) having 6 to 12 carbon atoms, and one or two of $R^1$ - $R^3$ are phenyl groups (including substituted derivatives substituted with halogen or alkyl), and $R^4$ is a hydrocarbon group; (b) a steric hindrance amine, and (c) an organic silicon compound selected from the group consisting of a dialkoxy silane and a trialkoxy silane.

**14.** The process according to any of the preceding claims, wherein the first stage polymerization is conducted in such a manner that a propylene homopolymer or a propylene/ethylene copolymer containing 7 wt.% or less of ethylene is produced in one step or multiple steps in an amount of 50 to 95 wt.% of the total amount of polymerized product.

**15.** The process according to any of the preceding claims, wherein the first stage polymerization is conducted at a temperature of 30 to 90 °C under a pressure of 1 to 30 $kg/cm^2$.

**16.** The process according to any of the preceding claims, wherein the alkoxytitanium compound is a tetraalkyltitanate of which the alkyl group has 2 to 6 carbon atoms.

**17.** The process according to claim 16, wherein the tetraalkyltitanate is tetra-n-butyltitanate.

**18.** The process according to any of the preceding claims, wherein the amount of the alkoxytitanium compound present in the latter stage is 5 to 30 moles per mole of the titanium contained in the solid catalyst component (A).

**19.** The process according to any of the preceding claims, wherein the second stage polymerization is conducted in such a manner that a propylene/ethylene copolymer with an ethylene content of 75 to 95 wt.% is produced in one step or multiple steps in an amount of 5 to 50 wt.% of the total amount of polymerized product.

20. The process according to any of the preceding claims, wherein a small amount of other comonomers coexist in the second stage polymerization.

21. The process according to any of the preceding claims, wherein the second stage polymerization is conducted at a temperature of 30 to 90 °C under a pressure of 1 to 30 kg/$cm^2$.

**Patentansprüche**

1. Verfahren zur Herstellung eines Propylenblockcopolymeren, das die Herstellung eines kristallinen Homopolymeren aus Propylen oder eines Copolymeren aus Propylen mit Ethylen mit einem Ethylengehalt von 7 Gew.-% oder weniger in der ersten Stufe in Gegenwart eines Katalysators vom Ziegler-Typ, der aus (A) einer festen Katalysatorkomponente, die Magnesium, Titan, ein Halogen und einen Elektronendonor als wesentliche Komponenten umfaßt, und (B) einer organischen Aluminiumverbindung gebildet wurde, und die Polymerisation von Ethylen oder einem Gemisch von Propylen/Ethylen unter Bildung eines Homopolymeren von Ethylen oder eines Copolymeren von Ethylen mit Propylen mit einem Ethylengehalt von mindestens 20 Gew.-% in der zweiten Stufe in Gegenwart des Homopolymeren oder Copolymeren umfaßt, dadurch gekennzeichnet, daß die zweite Polymerisationsstufe in Gegenwart von 1 bis 40 Mol einer Alkoxytitanverbindung pro Mol Titan in der vorstehenden Komponente (A) durchgeführt wird.

2. Verfahren nach Anspruch 1, wobei in der festen Katalysatorkomponente (A) vorhandenes Magnesium als Magnesiumhalogenid bereitgestellt wird.

3. Verfahren nach Anspruch 2, wobei es sich bei dem Magnesiumhalogenid um ein Magnesiumdihalogenid, das unter Magnesiumchlorid, Magnesiumbromid und Magnesiumjodid ausgewählt ist, handelt.

4. Verfahren nach Anspruch 3, wobei es sich bei dem Magnesiumhalogenid um ein Magnesiumchlorid, das weitgehend wasserfrei ist, handelt.

5. Verfahren nach einem der vorstehenden Ansprüche, wobei das in der festen Katalysatorkomponente (A) enthaltene Titan durch eine Titanhalogenidverbindung, die durch die Formel $Ti(OR^1)_nX_{4-n}$ wiedergegeben wird, wobei $R^1$ einen $C_1$-$C_{10}$-Kohlenwasserstoffrest bedeutet, X ein Halogen bedeutet und n = 0, 1 oder 2.

6. Verfahren nach Anspruch 5, wobei es sich bei der Titanhalogenidverbindung um $TiCl_4$ oder $Ti(OBu)Cl_3$ handelt.

7. Verfahren nach einem der vorstehenden Ansprüche, wobei es sich bei dem in der festen Katalysatorkomponente (A) enthaltenen Elektronendonor um einen polyfunktionellen Ester, der unter Estern mehrwertiger Carbonsäuren, mehrwertiger Alkohole und hydroxysubstituierter Carbonsäuren ausgewählt ist, handelt.

8. Verfahren nach Anspruch 7, wobei der polyfunktionelle Ester durch eine der nachfolgenden Formeln wiedergegeben wird:

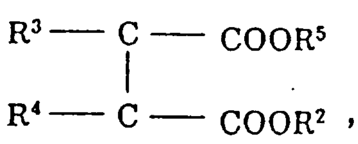

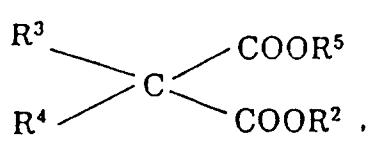

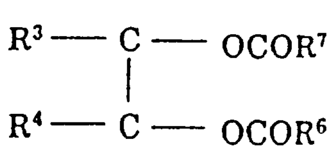

oder

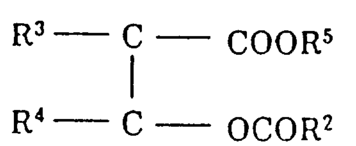

worin $R^5$ eine substituierte oder unsubstituierte Kohlenwasserstoffgruppe bedeutet; $R^2$, $R^3$ und $R^4$ jeweils Wasserstoff oder eine substituierte oder unsubstituierte Kohlenwasserstoffgruppe bedeuten; $R^6$ und $R^7$ jeweils Wasserstoff oder eine substituierte oder unsubstituierte Kohlenwasserstoffgruppe bedeuten, wobei $R^3$ und $R^4$ miteinander verknüpft sein können.

**9.** Verfahren nach Anspruch 8, wobei der polyfunktionelle Ester ein Diester von Phthalsäure mit Alkoholen mit 2 oder mehr Kohlenstoffatomen ist.

**10.** Verfahren nach einem der vorstehenden Ansprüche, wobei es sich bei dem in der festen Komponente (A) enthaltenen Elektronendonor um einen Monocarbonsäureester handelt, der durch die Formel $R^8COOR^9$ wiedergegeben wird, wobei $R^8$ und $R^9$ jeweils eine Hydrocarbylgruppe mit 1 bis 15 Kohlenstoffatomen bedeuten und mindestens einer der Reste eine verzweigte (einschließlich alicyclische) oder eine ringhaltige Kettengruppe ist.

**11.** Verfahren nach einem der vorstehenden Ansprüche, wobei es sich bei dem in der festen Komponente (A) enthaltenen Elektronendonor um eine organische Siliciumverbindung handelt, die durch die Formel (a) $R^{10}R^{11}Si(OR^{12})_2$ oder $R^{10}Si(OR^{12})_3$ dargestellt wird, worin $R^{10}$ eine multicyclische Kohlenwasserstoffgruppe mit 3 bis 20 Kohlenstoffatomen bedeutet, $R^{11}$ eine cyclische oder kettenförmige aliphatische Kohlenwasserstoffgruppe mit 1 bis 20 Kohlenstoffatomen bedeutet und $R^{12}$ eine kettenförmige aliphatische Kohlenwasserstoffgruppe mit nicht mehr als 4 Kohlenstoffatomen bedeutet; oder (b) $R^{13}R^{14}{}_{3-n}Si(OR^{15})_n$, worin $R^{13}$ einen verzweigtkettigen Kohlenwasserstoffrest mit 3 bis 20 Kohlenstoffatomen bedeutet, $R^{14}$ einen verzweigten oder geradkettigen aliphatischen Kohlenwasserstoffrest mit 1 bis 20 Kohlenstoffatomen bedeutet und $R^{15}$ einen kettenförmigen aliphatischen Kohlenwasserstoffrest mit 1 bis 4 Kohlenstoffatomen bedeutet und n eine Zahl ist, die die Bedingungen $2 \leqq n \leqq 3$ erfüllt.

**12.** Verfahren nach einem der vorstehenden Ansprüche, wobei es sich bei der organischen Aluminiumverbindung als Katalysatorkomponente (B) um eine Verbindung handelt, die durch die Formel $AlR_nX_{3-n}$ wiedergegeben wird, worin R einen Kohlenwasserstoffrest mit 1 bis 12 Kohlenstoffatomen darstellt, X ein Halogen oder eine Alkoxygruppe bedeutet und n die Bedingung $0 < n \leqq 3$ erfüllt.

**13.** Verfahren nach einem der vorstehenden Ansprüche, wobei der Katalysator vom Ziegler-Typ ferner einen Elektronendonor umfaßt, der unter (a) einem durch die folgende Formel wiedergegebenen Ether:

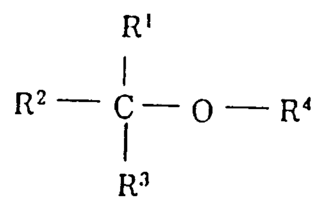

worin $R^1$ bis $R^3$ jeweils eine Alkyl- oder Alkenylgruppe (einschließlich substituierter Derivate, die mit Halogen oder Phenyl substituiert sind) mit 1 bis 10 Kohlenstoffatomen oder eine Phenylgruppe (einschließlich substituierter Derivate, die mit Halogen, Alkyl oder Phenyl substituiert sind) mit 6 bis 12 Kohlenstoffatomen bedeuten, und eine oder zwei der Gruppen $R^1$ bis $R^3$ Phenylgruppen (einschließlich substituierte Derivate, die mit Halogen oder Alkyl substituiert sind) bedeuten und $R^4$ eine Kohlenwasserstoffgruppe bedeutet; (b) einem sterisch gehinderten Amin und (c) einer unter Dialkoxysilanen und Trialkoxysilanen ausgewählten organischen Siliciumverbindung, ausgewählt ist.

**14.** Verfahren nach einem der vorstehenden Ansprüche, wobei die erste Polymerisationsstufe in einer solchen Weise durchgeführt wird, daß ein Propylenhomopolymeres oder ein Propylen/Ethylen-Copolymeres mit 7 Gew.-% oder weniger an Ethylen in einer Stufe oder mehreren Stufen gebildet wird, und zwar in einer Menge von 50 bis 95 Gew.-% des gesamten polymerisierten Produkts.

**15.** Verfahren nach einem der vorstehenden Ansprüche, wobei die erste Polymerisationsstufe bei einer Temperatur von 30 bis 90 °C und einem Druck von 1 bis 30 $kg/cm^2$ durchgeführt wird.

16. Verfahren nach einem der vorstehenden Ansprüche, wobei es sich bei der Alkoxytitanverbindung um ein Tetraalkyltitanat handelt, dessen Alkylgruppe 2 bis 6 Kohlenstoffatome aufweist.

17. Verfahren nach Anspruch 16, wobei es sich bei dem Tetraalkyltitanat um Tetra-n-butyltitanat handelt.

18. Verfahren nach einem der vorstehenden Ansprüche, wobei die Menge der in der zweiten Stufe vorhandenen Alkoxytitanverbindung 5 bis 30 Mol pro in der festen Katalysatorkomponente (A) enthaltenem Mol Titan beträgt.

19. Verfahren nach einem der vorstehenden Ansprüche, wobei die zweite Polymerisationsstufe in einer solchen Weisen durchgeführt wird, daß das Propylen/Ethylen-Copolymere mit einem Ethylengehalt von 75 bis 95 Gew.-% in einer Stufe oder in mehreren Stufen in einer Menge von 5 bis 50 Gew.-% der Gesamtmenge an polymerisiertem Produkt gebildet wird.

20. Verfahren nach einem der vorstehenden Ansprüche, wobei gleichzeitig eine kleine Menge anderere Comonomerer in der zweiten Polymerisationsstufe vorhanden ist.

21. Verfahren nach einem der vorstehenden Ansprüche, wobei die zweite Polymerisationsstufe bei einer Temperatur von 30 bis 90 °C unter einem Druck von 1 bis 30 $kg/cm^2$ durchgeführt wird.

## Revendications

1. Procédé de préparation d'un copolymère séquencé du propylène, qui comprend la préparation d'un homopolymère cristallin du propylène ou un copolymère du propylène avec l'éthylène ayant une teneur en éthylène de 7 % en poids ou moins dans un premier stade en présence d'un catalyseur du type Ziegler formé (A) d'un constituant catalytique solide comprenant du magnésium, du titane, un halogène et un donneur d'électrons comme constituants essentiels et (B) un composé organique de l'aluminium, et la polymérisation de l'éthylène ou d'un mélange propylène/éthylène pour donner un homopolymère de l'éthylène ou un copolymère de l'éthylène avec le propylène ayant une teneur en éthylène d'au moins 20 % en poids dans le second stade, en présence simultanément de cet homopolymère ou copolymère, caractérisé en ce que la polymérisation du second stade est effectuée en présence de 1 à 40 moles d'un alcoxytitane par mole du titane dans le constituant (A) ci-dessus.

2. Procédé selon la revendication 1, dans lequel le magnésium contenu dans le constituant catalytique solide (A) est apporté par un halogénure de magnésium.

3. Procédé selon la revendication 2, dans lequel l'halogénure de magnésium est un dihalogénure de magnésium choisi parmi le chlorure de magnésium, le bromure de magnésium et l'iodure de magnésium.

4. Procédé selon la revendication 3, dans lequel l'halogénure de magnésium est un chlorure de magnésium qui est pratiquement anhydre.

5. Procédé selon l'une quelconque des revendications précédentes, dans lequel le titane contenu dans le constituant catalytique solide (A) est apporté par un halogénure de titane représenté par la formule $T_i(OR^1)_nX_{4-n}$, dans laquelle $R^1$ est un radical hydrocarboné en $C_1$-$C_{10}$, X est un halogène et n est 0, 1 ou 2.

6. Procédé selon la revendication 5, dans lequel l'halogénure de titane est $TiCl_4$ ou $Ti(OBu)Cl_3$.

7. Procédé selon l'une quelconque des revendications précédentes, dans lequel le donneur d'électrons contenu dans le constituant catalytique solide (A) est un ester polyfonctionnel choisi parmi un polyacide carboxylique, un polyalcool et un acide carboxylique hydroxy-substitué.

8. Procédé selon la revendication 7, dans lequel l'ester polyfonctionnel est un ester représenté par les formules suivantes :

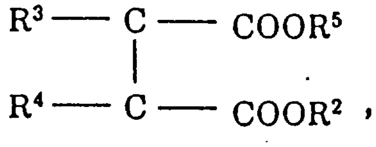

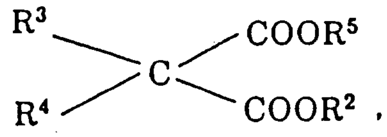

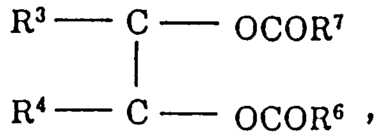

ou

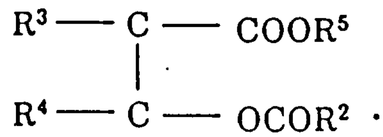

dans lesquelles $R^5$ est un groupe hydrocarboné substitué ou non substitué ; $R^2$, $R^3$ et $R^4$ sont chacun un atome d'hydrogène ou un groupe hydrocarboné substitué ou non substitué ; $R^6$ et $R^7$ sont chacun un atome d'hydrogène ou un groupe hydrocarboné substitué ou non substitué, dans lequel $R^3$ et $R^4$ peuvent être liés l'un à l'autre.

**9.** Procédé selon la revendication 8, dans lequel l'ester polyfonctionnel est un diester de l'acide phtalique avec des alcools ayant 2 atomes de carbone ou davantage.

**10.** Procédé selon l'une quelconque des revendications précédentes, dans lequel le donneur d'électrons contenu dans le constituant solide (A) est un ester d'acide monocarboxylique représenté par la formule $R^8COOR^9$, dans laquelle $R^8$ et $R^9$ sont chacun un groupe hydrocarbyle ayant 1 à 15 atomes de carbone, et au moins l'un ou l'autre est un groupe ramifié (y compris alicyclique) ou une chaîne contenant un cycle.

**11.** Procédé selon l'une quelconque des revendications précédentes, dans lequel le donneur d'électrons contenu dans le constituant solide (A) est un composé organique du silicium représenté par les formules (a) $R^{10}R^{11}Si(OR^{12})_2$ ou $R^{10}Si(OR^{12})_3$, dans lesquelles $R^{10}$ est un groupe hydrocarboné multicyclique en $C_3$-$C_{20}$, $R^{11}$ est un groupe hydrocarboné cyclique ou aliphatique linéaire en $C_1$-$C_{20}$ et $R^{12}$ est un groupe hyrocarboné aliphatique linéaire n'ayant pas plus de 4 atomes de carbone ; ou (b) $R^{13}R^{14}Si(OR^{15})_n$, dans laquelle $R^{13}$ est un radical hydrocarboné à chaîne ramifiée en $C_3$-$C_{20}$, $R^{14}$ est un radical hydrocarboné aliphatique à chaîne linéaire ou ramifiée en $C_1$-$C_{20}$, et $R^{15}$ est un radical hydrocarboné aliphatique en $C_1$-$C_4$, et n est tel que $2 \leqq n \leqq 3$.

**12.** Procédé selon l'une quelconque des revendications précédentes, dans lequel le composé organique de l'aluminium comme constituant catalytique (B) est un composé représenté par la formule $AlR_nX_{3-n}$, dans laquelle R représente un radical hydrocarboné en $C_1$-$C_{12}$, X est un atome d'halogène ou un groupe alcoxy et n est tel que $0 < n \leqq 3$.

**13.** Procédé selon l'une quelconque des revendications précédentes, dans lequel le catalyseur du type Ziegler comprend en outre un donneur d'électrons choisi parmi (a) un éther représenté par la formule :

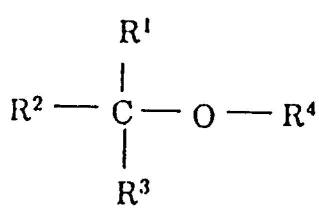

dans laquelle $R^1$-$R^3$ sont chacun un groupe alkyle ou alcényle (y compris des dérivés de substitution substitués par un atome d'halogène ou un groupe phényle) en $C_1$-$C_{10}$ , ou un groupe phényle (y compris des dérivés de substitution substitués par un atome d'halogène, un groupe alkyle ou phényle) en $C_6$-$C_{12}$, et un des groupes $R^1$-$R^3$ ou les deux sont des groupes phényle (y compris des dérivés de

substitution substitués par un atome d'halogène ou par un groupe alkyle), et $R^4$ est groupe hydrocarboné ; (b) une amine à empêchement stérique, et (c) un composé organique du silicium choisi parmi un dialcoxysilane et un trialcoxysilane.

**14.** Procédé selon l'une quelconque des revendications précédentes, dans lequel la polymérisation du premier stade est effectuée de telle manière que l'on obtienne un homopolymère du propylène ou un copolymère propylène/éthylène contenant 7 % en poids ou moins d'éthylène en une seule étape ou en des étapes multiples dans une proportion de 50 à 95 % en poids de la quantité totale de produit polymérisé.

**15.** Procédé selon l'une quelconque des revendications précédentes, dans lequel la polymérisation du premier stade est effectuée à une température de 30 à 90 °C sous une pression de 1 à 30 kg/cm$^2$.

**16.** Procédé selon l'une quelconque des revendications précédentes, dans lequel l'alcoxytitane est un titanate de tétraalkyle dont le groupe alkyle a 2 à 6 atomes de carbone.

**17.** Procédé selon la revendication 16, dans lequel le titanate de tétraalkyle est le titanate de tétra-n-butyle.

**18.** Procédé selon l'une quelconque des revendications précédentes, dans lequel la quantité d'alcoxytitane présente dans le dernier stade est de 5 à 30 moles par mole du titane contenu dans le constituant catalytique solide (A).

**19.** Procédé selon l'une quelconque des revendications précédentes dans lequel la polymérisation du second stade est effectuée de telle manière que l'on obtienne un copolymère propylène/éthylène ayant une teneur en éthylène de 75 à 95 % en poids en une seule étape ou dans des étapes multiples, dans une quantité comprise entre 5 et 50 % en poids de la quantité totale de produit polymérisé.

**20.** Procédé selon l'une quelconque des revendications précédentes, dans lequel une faible quantité d'autres comonomères coexistent dans la polymérisation du second stade.

**21.** Procédé sleon l'une quelconque des revendications précédentes dans lequel la polymérisation du second stade est effectuée à une température de 30 à 90 °C sous une pression de 1 à 30 kg/cm$^2$.